(19) Europäisches Patentamt
European Patent Office
Office européen des brevets

(11) **EP 3 612 762 B1**

(12) **EUROPÄISCHE PATENTSCHRIFT**

(45) Veröffentlichungstag und Bekanntmachung des Hinweises auf die Patenterteilung:
**22.12.2021 Patentblatt 2021/51**

(21) Anmeldenummer: **18719540.9**

(22) Anmeldetag: **20.04.2018**

(51) Int Cl.:
*F16L 43/00* *(2006.01)*       *B33Y 80/00* *(2015.01)*
*F16L 41/02* *(2006.01)*

(86) Internationale Anmeldenummer:
**PCT/EP2018/060208**

(87) Internationale Veröffentlichungsnummer:
**WO 2018/193101 (25.10.2018 Gazette 2018/43)**

(54) **FLUIDARMATUR FÜR EINE FLUIDLEITUNG**

FLUID FITTING FOR A FLUID LINE

ÉLÉMENT DE ROBINETTERIE À FLUIDE POUR UNE CONDUITE DE FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.04.2017 DE 202017102366 U**

(43) Veröffentlichungstag der Anmeldung:
**26.02.2020 Patentblatt 2020/09**

(73) Patentinhaber: **VOSS Fluid GmbH**
**51688 Wipperfürth (DE)**

(72) Erfinder:
• **WIEDERKEHR, Bettina**
**51688 Wipperfürth (DE)**
• **RÜCKERT, Marcel**
**52064 Aachen (DE)**
• **DIEßEL, Dominic**
**52064 Aachen (DE)**

(74) Vertreter: **Dr. Solf & Zapf**
**Patent- und Rechtsanwalts PartG mbB**
**Schlossbleiche 20**
**42103 Wuppertal (DE)**

(56) Entgegenhaltungen:
**EP-A1- 1 882 784        EP-A1- 2 288 836**
**DE-B- 1 078 509        US-A1- 2010 065 140**
**US-A1- 2014 166 149        US-A1- 2017 014 887**

EP 3 612 762 B1

**Beschreibung**

Die vorliegende Erfindung betrifft eine Fluidarmatur für eine Fluidleitung, mit einem Grundkörper, wobei der Grundkörper mindestens einen ersten Kanalzugang und mindestens einen zweiten Kanalzugang aufweist, wobei der erste Kanalzugang und der zweite Kanalzugang mit einem Fluidkanal verbunden sind, wobei in dem Grundkörper mindestens ein Einsatzraum ausgebildet ist, wobei in den Einsatzraum mindestens ein Einsatz eingebracht ist, und wobei der Strömungskanal zumindest teilweise durch den Einsatz verläuft.

Gattungsgemäße Fluidarmaturen sind im Stand der Technik in einer Vielzahl von Ausgestaltungen bekannt. Dabei handelt es sich um beliebige Schnittstellen für Flüssigkeiten oder Gase, die verbinden, verteilen und/oder umlenken und am Fluideingang und -ausgang verschiedene Anschlussarten aufweisen können. Die Fluidarmatur wird über den ersten Kanalzugang und/oder den zweiten Kanalzugang an Rohrleitungen angeschlossen, um beispielsweise die Strömung zwischen dem ersten Kanalzugang und dem zweiten Kanalzugang umzulenken.

Derartige Fluidarmaturen werden üblicherweise dadurch hergestellt, dass in einem massiven Grundkörper, beispielsweise aus Metall, Ausnehmungen eingebracht werden, um einen Strömungskanal auszubilden, der über den ersten Kanalzugang und den zweiten Kanalzugang angeschlossen werden kann. Dabei ist es aus dem Stand der Technik bekannt, die Ausnehmung oder Ausnehmungen als Einsatzraum für einen Einsatz zu verwenden, der einen Strömungskanal aufweist, und mittels dem der Strömungsverlauf zwischen erstem Kanalzugang und zweitem Kanalzugang optimiert wird.

EP 2 288 836 A1 offenbart beispielsweise einen Verbinder für Fluid-Leitungen, bei dem in einen Einsatzraum ein erstes Einsatzteil und ein zweites Einsatzteil eingebracht werden, um jeweils eine Anschlussschnittstelle in Form eines Anschlussdorns auszubilden.

DE 1 078 509 B offenbart ein vorgefertigtes Betonformstück für die Ausbildung von Knickpunkten in Druckrohrleitungen. In die Endbereiche der Druckrohrleitung im Knickpunkt sind Rohrleitungen einbringbar.

US 2010/065140 A1 offenbart eine Verzweigung für Rohrleitungen. In der Verzweigung ist beispielsweise ein rotierbares Einsatzteil gehalten, um beispielsweise ein Reinigungsgerät in einen Abzweig umzuleiten.

US 2014/166149 A1 offenbart eine erosionsresistente Rohrleitung. Innerhalb eines druckfesten Gehäuses ist eine Umlenkvorrichtung eingesetzt.

US 2017/014887 A1 offenbart ein Verfahren zur Herstellung eines Einsatzteils für eine Rohrleitung, bei dem ein Fluid mit Partikeln durch das Einsatzteil geleitet wird.

Aus dem Stand der Technik bekannte Fluidarmaturen weisen dabei den Nachteil auf, dass der Zusammenbau der Fluidarmatur aufwändig ist. Zudem ist die Querschnittsform und der Querschnittsverlauf des Strömungskanals in seiner Formvielfalt fertigungstechnisch begrenzt.

Der vorliegenden Erfindung liegt daher die Aufgabe zu Grunde, gattungsgemäße Fluidarmaturen dahingehend zu verbessern, dass eine kostengünstige Fertigung und Montage bei gleichzeitig gesteigerter Formvielfalt des Strömungsquerschnitts gegeben ist.

Die vorgenannte Aufgabe ist gemäß der vorliegenden Erfindung dadurch gelöst, dass der Einsatz mindestens ein erstes Einsatzteil und mindestens ein zweites Einsatzteil aufweist. Der in den Einsatzraum eingebrachte Einsatz der Fluidarmatur ist folglich mindestens zweiteilig ausgebildet, insbesondere ist der Einsatz aus zwei zusammenwirkenden Einsatzteilen zusammengefügt.

Der Grundkörper verfügt über einen ersten Kanalzugang und einen zweiten Kanalzugang, also zwei Bereiche, in denen jeweils eine Rohrleitung derart anschließbar ist, dass diese Rohrleitung mit dem in dem Grundkörper verlaufenden Strömungskanal verbunden ist. Der Grundkörper ist insbesondere aus einem Metall oder einem Kunststoff hergestellt.

Der erste Kanalzugang und/oder der zweite Kanalzugang können beispielsweise als Verschraubung, insbesondere Flansch- oder Schneidringverschraubung, oder als Quetsch- oder Klemmverbindung zur Herstellung einer dichtenden Verbindung mit einer Rohr- oder Schlauchleitung ausgebildet sein.

Innerhalb des Grundkörpers ist mindestens ein Einsatzraum ausgebildet, in den der Einsatz eingebracht ist, folglich das erste Einsatzteil und das zweite Einsatzteil eingebracht sind. Das erste Einsatzteil und das zweite Einsatzteil sind derart ausgebildet, dass der Strömungskanal der Fluidarmatur zwischen dem ersten Kanalzugang und dem zweiten Kanalzugang zumindest teilweise durch den Einsatz, also zumindest teilweise durch das erste Einsatzteil und zumindest teilweise durch das zweite Einsatzteil, verläuft. Dabei ist sowohl vorgesehen, dass der Strömungskanal innerhalb des ersten Einsatzteil und/oder des zweiten Einsatzteils umfänglich geschlossen ist als auch, dass der Strömungskanal im ersten Einsatzteil und/oder zweiten Einsatzteil einen umfänglich zumindest teilweise offenen Querschnitt aufweist, beispielsweise C-förmig ausgebildet ist. In diesem Fall wird der Strömungskanal in den offenen Abschnitten insbesondere durch den Grundkörper begrenzt.

Der Grundkörper ist beispielsweise aus einem Metall, insbesondere aus Druckguss, ausgebildet. Es ist aber auch vorgesehen, dass der Grundkörper aus einem Kunststoff hergestellt ist, insbesondere einem faserverstärkten Kunststoff.

Vorteilhaft liegt die Stoßstelle zwischen dem ersten Einsatzteil und dem zweiten Einsatzteil im Längsverlauf des Strömungskanals. Das erste Einsatzteil und das zweite Einsatzteil weisen vorzugsweise jeweils eine um etwa 45° geneigte Stoßfläche auf, so dass die Einsatzteile mit Ihren Stoßflächen innerhalb des Grundkörpers aneinandergefügt werden können. Bei diesem Beispiel ergibt sich dann eine Anordnung der Einsatzteile in einem Winkel von 90° zueinander. Ferner sind Anordnungen mit einem Winkel von 45°, 60° und 130° zueinander vorgesehen.

Je nach Strömungsrichtung folgt im Strömungsverlauf des Strömungskanals folglich das zweite Einsatzteil auf das erste Einsatzteil oder das erste Einsatzteil auf das zweite Einsatzteil. Es ist sowohl vorgesehen, die Fluidarmatur für eine einzige Strömungsrichtung zu optimieren als auch vorgesehen, die Fluidarmatur für wechselnde Strömungsrichtungen zu optimieren. Ziel bei einer fluidtechnischen Optimierung des Strömungskanals ist es, Diskontinuitäten im Strömungsverlauf des Fluids zu vermeiden, insbesondere dadurch, dass die Innenkontur des Strömungskanals durch den Grundkörper der Fluidarmatur, insbesondere das erste Einsatzteil und das zweite Einsatzteil, vorteilhaft so ausgelegt ist, dass eine zur Vermeidung von Strömungsverlusten optimierte Anpassung des Querschnitts des Strömungskanals an eine sich bei Fluiddurchsatz ausbildende Strömung vorliegt.

Ein Kriterium für diese Anpassung ist dabei die Erzielung eines möglichst laminaren Strömungsverlaufes innerhalb der Fluidarmatur. Dieser liegt bei einer Rohrströmung dann vor, wenn die dimensionslose, so genannte Reynoldszahl Re, die ein Maß für das Verhältnis der Trägheitskräfte zu den Zähigkeitskräften im Strömungsmedium darstellt, kleiner als die so genannte kritische Reynoldszahl $Re_{krit}$ ist:

$$Re = \frac{\rho \cdot v \cdot d}{\eta}$$

Dabei ist $\rho$ [kg/m³] die Dichte des Fluids, v [m/s] die Strömungsgeschwindigkeit, d die charakteristische Länge [m] und $\eta$ [kg/m*s]] die dynamische Viskosität.

Es ist zudem vorgesehen, dass das erste Einsatzteil und/oder das zweite Einsatzteil jeweils an die montierte Rohrleitung heranreicht, insbesondere über den gesamten Umfang an die Rohrleitung heranreicht. Dadurch wird gewährleistet, dass der Fluidkanal keine Unterbrechungen aufweist. Zudem ist vorgesehen, dass der Durchmesser des Einsatzraums, insbesondere einer den Einsatzraum bildenden Bohrung, größer ist als der Innendurchmesser einer angeschlossenen Rohrleitung. Dadurch wird eine ausreichende Wandstärke des Einsatzteils gewährleistet und sichergestellt, dass der Fluidkanal ohne Versatz von einer Rohrleitung auf ein Einsatzteil übergeht.

Die Strömung im Strömungskanal wird erfindungsgemäß dadurch beeinflusst, dass das erste Einsatzteil und/oder das zweite Einsatzteil eine konvexe Aufwölbung aufweisen, die in den Strömungskanal hineinragt, insbesondere dass die konvexe Aufwölbung im Übergangsbereich zwischen dem ersten Einsatzteil und dem zweiten Einsatzteil angeordnet ist. Die konvexe Aufwölbung erstreckt sich vorzugsweise symmetrisch von einer gedachten Ebene E, die die beiden Längsachsen des Strömungskanals im ersten Einsatzteil und des Strömungskanals im zweiten Einsatzteil beinhaltet und von diesen aufgespannt wird. Vorzugsweise ist die konvexe Aufwölbung im Übergangsbereich zwischen dem ersten Einsatzteil und dem zweiten Einsatzteil derart angeordnet, dass zwischen der konvexen Aufwölbung des ersten Einsatzteils und der konvexen Aufwölbung des zweiten Einsatzteils ein Tal ausgebildet ist. Alternativ dazu ist vorgesehen, dass die Aufwölbungen so angeordnet sind, dass die Aufwölbungen unmittelbar, insbesondere ohne die Ausbildung eines Tals, ineinander übergehen. Die konvexe Aufwölbung ist insbesondere durch eine Erhebung an mindestens einer Stelle in der Wand des Strömungskanals im ersten Einsatzteil bzw. im zweiten Einsatzteil gebildet.

Die Geometrie des Einsatzes bzw. der Einsatzteile mit den Aufwölbungen zielt auf die Minimierung der Sekundärströmungen, also Wirbel ab, ohne den Leitungsquerschnitt zu stark einzuschränken. Hierfür müssen Totwassergebiete möglichst vermieden werden. Zur Reduzierung von Totwassergebieten kann durch eine Aufwölbung stromaufwärts des möglichen Strömungsabrisses ein schnelleres Wiederanlegen der Strömung nach dem Strömungsabriss erfolgen. Durch die stromaufwärts angeordnete Aufwölbung wird die Strömung frühzeitig umgelenkt und die Strömung kann sich so schnell wieder an die Wand des Strömungskanals anlegen.

Stromabwärts folgt im Strömungskanal dann die Aufwölbung des jeweils folgenden Einsatzteils, die ein potentielles Totwassergebiet hinter dem Strömungsabriss auffüllt, um Wirbel zu vermeiden. Durch die stromaufwärts und stromabwärts angeordneten Aufwölbungen - im ersten und im zweiten Einsatzteil - entsteht eine symmetrische Geometrie, die Strömungsabrisse fast vollständig vermeidet und strömungsrichtungsunabhängig funktionsfähig ist.

Bezogen auf den Strömungsquerschnitt wird üblicherweise durch die Aufwölbung oberhalb des Strömungsabrisses, die über den Umfang variieren kann, ein Drall in das Fluid eingebracht. Die Strömung verläuft also nicht genau parallel, sondern wird an den Wänden stärker umgelenkt, als in der Mitte des Strömungskanals. Dieser Drall führt zu einer weiteren Reduzierung der Strömungsverluste durch ein schnelleres Wiederanlegen beziehungsweise eine Minimierung der Ablösung der Strömung.

Gegenüber dem Stand der Technik hat die vorliegende Erfindung den Vorteil, dass bei der Optimierung des Querschnitts des Strömungskanals durch die Zweiteiligkeit des Einsatzes komplexe Geometrien, beispielsweise mit Hinterschnitten, realisiert werden können, die mit einem einstückigen Einsatz nicht realisierbar sind.

Gemäß einer ersten Ausgestaltung der Fluidarmatur hat sich als vorteilhaft herausgestellt, wenn das erste Einsatzteil und das zweite Einsatzteil identisch ausgebildet sind. Wenn das erste Einsatzteil und das zweite Einsatzteil identisch ausgebildet sind, wird die Herstellung des Einsatzes vereinfacht und die Kosten gesenkt.

Das erste und das zweite Einsatzteil sind vollständig identisch ausgebildet, jedoch im Montagezustand im Grundkörper unterschiedlich zueinander ausgerichtet. Ein erster Teil des Strömungskanals im ersten Einsatzteil bildet zusammen mit einem zweiten Teil des Strömungskanals im zweiten Einsatzteil zumindest einen Teil des Strömungskanals innerhalb des Grundkörpers. Vorzugsweise ist der Strömungskanal im Grundkörper zwischen dem ersten Kanalzugang und dem zweiten Kanalzugang vollständig innerhalb des ersten Einsatzteils und des zweiten Einsatzteils ausgebildet. Besonders bevorzugt ist vorgesehen, dass an dem Grundkörper bzw. an der Fluidarmatur montierte Rohrleitungen unmittelbar in das erste Einsatzteil bzw. das zweite Einsatzteil münden.

Durch die identische Ausgestaltung des ersten Einsatzteils und des zweiten Einsatzteils wird eine identische Durchflusscharakteristik unabhängig von der Durchflussrichtung des Einsatzes erzielt. Der Einsatz kann also strömungsrichtungsunabhängig eingesetzt werden und weist identische Druckverluste in beiden Richtungen und damit keine Vorzugsrichtung auf. Des Weiteren wird der Einbau durch den symmetrischen Aufbau der Einsatzteile eindeutig und eine fehlerhafte Montage wird ausgeschlossen.

Gemäß einer weiteren Ausgestaltung der Fluidarmatur ist vorgesehen, dass das erste Einsatzteil und das zweite Einsatzteil aus zwei unterschiedlichen Richtungen in den Grundkörper eingebracht sind, insbesondere das erste Einsatzteil aus Richtung des ersten Kanalzugangs und das zweite Einsatzteil aus Richtung des zweiten Kanalzugangs. Vorzugsweise werden das erste Einsatzteil und das zweite Einsatzteil folglich durch unterschiedliche Öffnungen des Grundkörpers in den Einsatzraum eingebracht und erforderlichenfalls am Grundkörper befestigt.

Dadurch, dass das erste Einsatzteil und das zweite Einsatzteil aus zwei verschiedenen Richtungen in den Grundkörper eingebracht sind, können andere Geometrien, sowohl des Querschnitts des Strömungskanals als auch der Außenkontur der Einsatzteile gebildet werden, als dies bei einem einstückigen Einsatzteil möglich wäre. Bevorzugt ist vorgesehen, dass das erste Einsatzteil aus Richtung des ersten Kanalzugangs und das zweite Einsatzteil aus Richtung des zweiten Kanalzugangs in den Einsatzraum des Grundkörpers eingebracht sind. Der erste Kanalzugang und der zweite Kanalzugang sind dazu derart ausgebildet, dass das erste Einsatzteil bzw. das zweite Einsatzteil jeweils hindurchtreten können und anschließend eine Montage zumindest einer Rohrleitung am ersten Kanalzugang und/oder am zweiten Kanalzugang möglich ist.

Gemäß einer weiteren Ausgestaltung der Fluidarmatur ist vorgesehen, dass der Einsatzraum mindestens durch eine erste Bohrung und mindestens durch eine zweite Bohrung in dem Grundkörper ausgebildet ist, wobei die erste Bohrung und die zweite Bohrung in einem Winkel zwischen 5° und 175°, insbesondere einem Winkel von 45°, 60°, 90° oder 130°, zueinander angeordnet sind. Der Winkel bezieht sich dabei auf die jeweiligen Mittelachsen der ersten Bohrung bzw. der zweiten Bohrung.

Durch den Bohrvorgang mit einem Bohrer mit einer Konusspitze wird in dem Stoßbereich der ersten Bohrung und der zweiten Bohrung, also in dem Bereich, in dem die Bohrungen aufeinandertreffen, ein Vorsprung ausgebildet, wobei das erste Einsatzteil und/oder das zweite Einsatzteil eine an den Vorsprung angepasste Außenkontur, insbesondere einen zu dem Vorsprung zumindest teilweise korrespondierenden Rücksprung, aufweisen. Durch die Anpassung der Außenkontur des ersten Einsatzteils und/oder des zweiten Einsatzteils an den Vorsprung kann eine vordefinierte Positionierung des ersten Einsatzteils und/oder des zweiten Einsatzteils gewährleistet werden. Insbesondere kann die Außenkontur auch so vorgesehen sein, dass eine Fehlmontage verhindert wird, indem ausschließlich eine einzige richtige Montageposition existiert.

Insbesondere bei einem Winkel von 90° zwischen der ersten Bohrung und der zweiten Bohrung wird in einem Eckbereich, in dem sich die Spitzen der Bohrungen bei der Herstellung treffen, ein Vorsprung ausgebildet, der sich vorteilhaft für eine Überprüfung der lagerichtigen Montage des ersten Einsatzteiles und des zweiten Einsatzteils eignet. Zudem weist der Vorsprung eine derartige asymmetrische Kontur auf, dass auch ein Verdrehen des ersten Einsatzteils und des zweiten Einsatzteils verhindert wird.

Alternativ dazu ist auch vorgesehen, dass der Vorsprung nach dem Herstellen der Bohrung entfernt wird, oder dass Bohrer verwendet werden, mit denen kein Vorsprung ausgebildet wird.

Als besonders vorteilhaft hat sich gemäß einer weiteren Ausgestaltung der Fluidarmatur herausgestellt, wenn vorgesehen ist, dass das erste Einsatzteil und das zweite Einsatzteil jeweils ein Verbindungsmittel aufweisen, so dass ein form- und/oder kraftschlüssiges, insbesondere kraftformschlüssiges, Zusammenwirken, insbesondere Verrasten, des ersten Einsatzteils mit dem zweiten Einsatzteil erfolgt. Das erste Einsatzteil und das zweite Einsatzteil werden folglich nach dem Einbringen oder während des Einbringens in den Grundkörper mittels einer formschlüssigen und/oder kraftschlüssigen, insbesondere kraftformschlüssigen, Verbindung miteinander verbunden, so dass die einzelnen Abschnitte des Strömungskanals im ersten Einsatzteil und im zweiten Einsatzteil vorteilhaft zusammenwirken können. Durch die Verbindung werden das erste Einsatzteil und das zweite Einsatzteil nach der Montage in Position gehalten.

Das Verbindungsmittel am ersten Einsatzteil und am zweiten Einsatzteil ist vorzugsweise zumindest teilweise entfernbar ausgebildet, so dass beispielsweise bei identisch ausgebildetem ersten Einsatzteil und zweiten Einsatzteil ein Teil des Verbindungsmittels entfernbar ist, um eine Verbindung zwischen dem ersten Einsatzteil und dem zweiten Einsatzteil - auch bei zunächst identisch ausgebildetem Verbindungsmittel - zu ermöglichen.

Alternativ dazu ist das Verbindungsmittel oder sind die Verbindungsmittel so ausgebildet, dass auch bei identisch ausgebildetem ersten Einsatzteil und zweiten Einsatzteil ein Verrasten bzw. ein Verbinden möglich ist, indem das Verbindungsmittel des ersten Einsatzteils und das Verbindungsmittel des zweiten Einsatzteils zusammenwirken.

Gemäß einem weiteren Ausführungsbeispiel der Fluidarmatur ist ferner vorgesehen, dass das erste Einsatzteil und das zweite Einsatzteil nach dem Einbringen in den Grundkörper stoffschlüssig zusammengefügt werden bzw. stoffschlüssig zusammengefügt worden sind. Durch das stoffschlüssige Zusammenfügen des ersten Einsatzteils und des zweiten Einsatzteils kann insbesondere eine zuverlässige Dichtheit des Strömungskanals, vor allem bei Hochdruckanwendungen, sichergestellt werden.

Insbesondere die Eigenschaften der Strömung innerhalb des Strömungskanals werden gemäß einer weiteren Ausgestaltung dadurch vorteilhaft beeinflusst, dass der Strömungskanal einen sich im Verlauf innerhalb des ersten Einsatzteils und/oder des zweiten Einsatzteils verändernden Querschnitt aufweist. Der Querschnitt des Strömungskanals zwischen erstem Kanalzugang und zweitem Kanalzugang ist folglich nicht konstant, sondern verändert sich im Längsverlauf des Strömungskanals und ist insbesondere derart strömungstechnisch optimiert, dass Ablösevorgänge und Wirbelbildung an den Wänden vermieden werden.

Es ist auch vorgesehen, dass der Strömungskanal in seinem Verlauf durch das erste Einsatzteil und das zweite Einsatzteil einen konstanten Querschnitt aufweist. Insbesondere ist vorgesehen, dass der Querschnitt mindestens einer angeschlossenen Rohrleitung, insbesondere beider angeschlossener Rohrleitungen, konstant im Strömungskanal der Einsatzteile fortgeführt wird. Es ist auch vorgesehen, dass der Strömungskanal in den Einsatzteilen so ausgebildet ist, dass sich der Querschnitt ändert, die Querschnittsfläche aber konstant bleibt.

Dabei hat sich gemäß einer weiteren Ausgestaltung der Fluidarmatur als vorteilhaft herausgestellt, wenn vorgesehen ist, dass der Querschnitt des Strömungskanals im ersten Einsatzteil und im zweiten Einsatzteil, insbesondere der Strömungskanal durch das erste Einsatzteil und das zweite Einsatzteil insgesamt, einen stetigen Verlauf aufweist. Änderungen im Querschnitt oder Richtungsänderungen der Wand des Strömungskanals erfolgen stets stetig und nicht sprunghaft. Durch stetige Änderungen, im Gegensatz zu sprunghaften Änderungen, werden Strömungsablösungen und Wirbelbildung zuverlässig reduziert.

Gemäß einer weiteren Ausgestaltung der Fluidarmatur ist vorgesehen, dass der vom zweiten Einsatzteil abgewandte Querschnitt des Strömungskanals im ersten Einsatzteil, insbesondere der Eintrittsquerschnitt, und der von dem ersten Einsatzteil abgewandte Querschnitt des Strömungskanals im zweiten Einsatzteil, insbesondere der Eintrittsquerschnitt, jeweils der kleinste Strömungsquerschnitt des Strömungskanals im jeweiligen Einsatzteil ist. Der jeweilige Eintrittsquerschnitt grenzt bevorzugt unmittelbar an den Strömungsquerschnitt einer an die Fluidarmatur angeschlossenen Rohr- oder Schlauchleitung bzw. Rohrleitungen oder Schlauchleitungen. Der Querschnitt des Strömungskanals ist folglich im Übergangsbereich jeweils zum ersten Kanalzugang und zum zweiten Kanalzugang der flächenmäßig kleinste Querschnitt des Strömungskanals, wodurch die Eigenschaften der Strömung vorteilhaft beeinflusst werden.

Des Weiteren ist gemäß einer Ausgestaltung vorgesehen, dass das erste Einsatzteil und/oder das zweite Einsatzteil eine variierende Wandstärke im Verlauf des Strömungskanals aufweisen. Mit der Wandstärke variiert insbesondere auch der Querschnitt des Strömungskanals. Zudem ist eine variierende Wandstärke dann vorteilhaft, wenn eine Verformbarkeit des ersten Einsatzteils und/oder des zweiten Einsatzteils in eine bestimmte Richtung erreicht werden soll. Dies kann insbesondere dann vorteilhaft sein, wenn eine Blockade einer zu montierenden Rohrleitung am ersten Kanalzugang und/oder am zweiten Kanalzugang zu verhindern ist, insbesondere indem sich das erste Einsatzteil und/oder das zweite Einsatzteil zumindest in einer Achsrichtung zumindest teilweise verformt.

Besonders zur weiteren Vereinfachung der Montage hat sich gemäß einer nächsten Ausgestaltung der Fluidarmatur als vorteilhaft herausgestellt, wenn vorgesehen ist, dass das erste Einsatzteil und/oder das zweite Einsatzteil durch eine mit der Fluidarmatur verbundene Rohrleitung in Position gehalten werden. Die Rohrleitung ist dichtend mit dem ersten Kanalzugang bzw. mit dem zweiten Kanalzugang verbunden. Die Rohrleitung hat folglich eine ortsfeste Lage und wird dazu verwendet, das erste Einsatzteil und/oder das zweite Einsatzteil ebenfalls in seiner Position zu halten und zu verhindern, dass das erste Einsatzteil und/oder das zweite Einsatzteil aus dem ersten Kanalzugang oder aus dem zweiten Kanalzugang aus dem Grundkörper heraustritt.

Vorzugsweise handelt es sich bei der Fluidarmatur um eine Winkelverschraubung, insbesondere um eine 90°-Verschraubung, bei der das erste Einsatzteil und das zweite Einsatzteil vorteilhaft zueinander angeordnet werden können.

Gemäß einer weiteren alternativen Ausgestaltung ist zudem vorgesehen, dass das erste Einsatzteil und das zweite Einsatzteil unterschiedlich ausgebildet sind, so dass eine bevorzugte Strömungsrichtung im Strömungskanal ausgebildet wird. Bei identischem ersten und zweiten Einsatzteil, insbesondere identischem Strömungskanalabschnitt, verfügt die Fluidarmatur nicht über eine bevorzugte Strömungsrichtung; beide Strömungsrichtungen sind bevorzugt. Sind jedoch das erste Einsatzteil und das zweite Einsatzteil unterschiedlich, insbesondere der erste Strömungskanalabschnitt im ersten Einsatzteil und der zweite Strömungskanalabschnitt im zweiten Einsatzteil, ausgebildet, wird durch den durch das erste Einsatzteil und das zweite Einsatzteil definierten Strömungskanal eine bevorzugte Strömungsrichtung festgelegt, mit der die Fluidarmatur zu durchströmen ist, um geringstmögliche Strömungsverluste zu verursachen.

Gemäß einer weiteren Ausgestaltung der Fluidarmatur ist vorgesehen, dass das erste Einsatzteil und/oder das zweite Einsatzteil in Axialrichtung, insbesondere in Längsrichtung einer mit der Fluidarmatur verbundenen Rohrleitung, komprimierbar ausgebildet sind, insbesondere elastisch verformbar ausgebildet sind. Dazu ist das erste Einsatzteil und/oder das zweite Einsatzteil beispielsweise aus zwei Komponenten ausgebildet, bzw. das erste Einsatzteil und/oder das zweite Einsatzteil weist beispielsweise eine Dichtung aus einer zweiten Komponente auf, die eine axiale Komprimierbarkeit des ersten Einsatzteils und/oder des zweiten Einsatzteils gewährleistet.

Zusätzlich oder alternativ dazu ist auch vorgesehen, dass die Wandstärke des ersten Einsatzteils und/oder des zweiten Einsatzteils lokal so weit reduziert ist, dass eine axiale Komprimierbarkeit realisiert wird. Eine axiale Komprimierbarkeit ist insbesondere bei Schneidringverschraubungen vorteilhaft, um eine axiale Blockade einer Bewegung der Rohrleitung und damit eine fehlerhafte Schneidringverschraubung durch das erste Einsatzteil und/oder das zweite Einsatzteil zu verhindern.

Schneidringverschraubungen sind bevorzugte Befestigungsmöglichkeiten für eine Rohrleitung am ersten Kanalzugang und am zweiten Kanalzugang, so dass gemäß einer weiteren Ausgestaltung vorgesehen ist, dass der Grundkörper am ersten Kanalzugang und/oder am zweiten Kanalzugang einen Anschlusskonus mit einem zylindrischen Bereich aufweist. Die Rohrleitung wird in den zylindrischen Bereich eingeschoben und der auf der Rohrleitung vormontierte Schneidring dichtet mit seiner Dichtfläche an dem Anschlusskonus des ersten Kanalzugangs und/oder des zweiten Kanalzugangs ab. Vorteilhaft ist das erste Anschlussteil und/oder das zweite Anschlussteil derart dimensioniert, dass es nicht in den zylindrischen Bereich des ersten Kanalzugangs und/oder des zweiten Kanalzugangs hineinragt.

Eine weitere Ausgestaltung sieht vor, dass das erste Einsatzteil und/oder das zweite Einsatzteil in den Einsatzraum, insbesondere in die Bohrungen, eingepresst sind. Insbesondere ist vorgesehen, dass die Oberflächenrauheit in dem Einsatzraum, insbesondere in den Bohrungen, derart ausgebildet wird, insbesondere derart bearbeitet wird, dass ein eingepresstes Einsatzteil vorteilhaft in dem Einsatzraum gehalten wird. Beispielsweise weisen das erste Einsatzteil und/oder das zweite Einsatzteil zum Einpressen ein geringes Übermaß gegenüber dem Einsatzraum, insbesondere der Bohrung, auf.

Gemäß einer letzten Ausgestaltung der Fluidarmatur ist vorgesehen, dass das erste Einsatzteil und/oder das zweite Einsatzteil aus einem verstärkten oder unverstärkten Kunststoff, insbesondere Polyamid oder einem Elastomer, insbesondere einem thermoplastischen Elastomer, oder einem Metall, insbesondere aus Aluminium, aus Stahl oder aus Druckguss, ausgebildet sind. Durch diese Materialwahl ist einerseits eine kostengünstige Herstellbarkeit, andererseits auch ein vorteilhaftes Materialverhalten bezüglich Verschleiß gegeben. Insbesondere bei sehr hohen Drücken, z. B. oberhalb von 80 MPa, hat sich Metall als Material für die Einsatzteile als vorteilhaft herausgestellt. Zudem ist vorgesehen, dass die Einsatzteile - aus Kunststoff oder Metall - mittels eines 3D-Druckverfahrens hergestellt sind. Dadurch lassen sich vorteilhafte Geometrien für den Strömungskanal erzeugen.

Weitere vorteilhafte Ausgestaltungen der Erfindung ergeben sich aus der folgenden Figurenbeschreibung und den abhängigen Unteransprüchen.

Es zeigen:

Fig. 1    ein Ausführungsbeispiel einer Fluidarmatur während der Montage im Schnitt,

Fig. 2    ein Ausführungsbeispiel einer Fluidarmatur in Seitenansicht,

Fig. 3    das Ausführungsbeispiel gemäß Fig. 2 im Schnitt entlang der Linie A-A,

Fig.4    das Ausführungsbeispiel gemäß Fig. 2 im Schnitt entlang der Linie B-B,

Fig. 5    ein Ausführungsbeispiel eines Einsatzteils in Seitenansicht,

Fig. 6    das Ausführungsbeispiel eines Einsatzteils der Fig. 5 in Frontansicht,

Fig. 7    das Ausführungsbeispiel der Fig. 5 und 6 im Schnitt entlang der Linie A-A in Fig. 6,

Fig. 8    das Ausführungsbeispiel der Fig. 5 und 6 im Schnitt entlang der Linie B-B in Fig. 5, und

Fig. 9    ein Ausführungsbeispiel einer Fluidarmatur.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist.

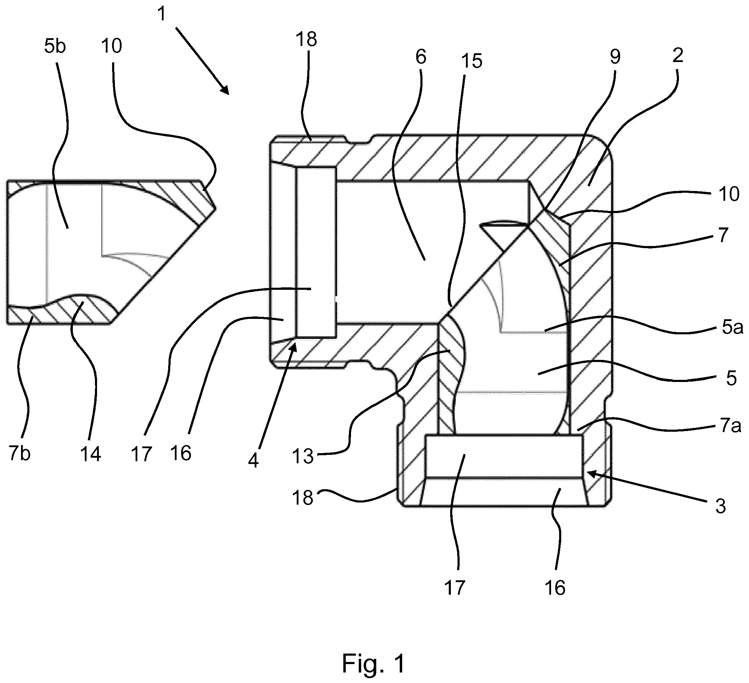

Fig. 1 zeigt ein Ausführungsbeispiel einer Fluidarmatur 1 während der Montage. Die Fluidarmatur 1 weist einen Grundkörper 2 mit mindestens einem ersten Kanalzugang 3 und mindestens einem zweiten Kanalzugang 4 auf. Der erste Kanalzugang 3 und der zweite Kanalzugang 4 sind mit dem Strömungskanal 5 verbunden. Der Grundkörper 2 weist mindestens einen Einsatzraum 6 auf, in den mindestens ein Einsatz 7 eingebracht ist, wobei der Einsatz 7 mindestens ein erstes Einsatzteil 7a und ein zweites Einsatzteil 7b aufweist.

Der Strömungskanal 5 wird aus einem ersten Strömungskanalabschnitt 5a des Strömungskanals 5 im ersten Einsatzteil 7a und einem zweiten Strömungskanalabschnitt 5b des Strömungskanals 5 im zweiten Einsatzteil 7b gebildet. Das erste Einsatzteil 7a und das zweite Einsatzteil 7b sind bei diesem Ausführungsbeispiel vollständig identisch ausgebildet und aus unterschiedlichen Richtungen in den Einsatzraum 6 eingebracht.

Gemäß Fig. 1 ist das erste Einsatzteil 7a von unten und das zweite Einsatzteil 7b von links in den Grundkörper 2 eingebracht, wobei Fig. 1 den Montagevorgang des zweiten Einsatzteils 7b zeigt. Das zweite Einsatzteil 7b wird durch den zweiten Kanalzugang 4 in den Einsatzraum 6 eingebracht.

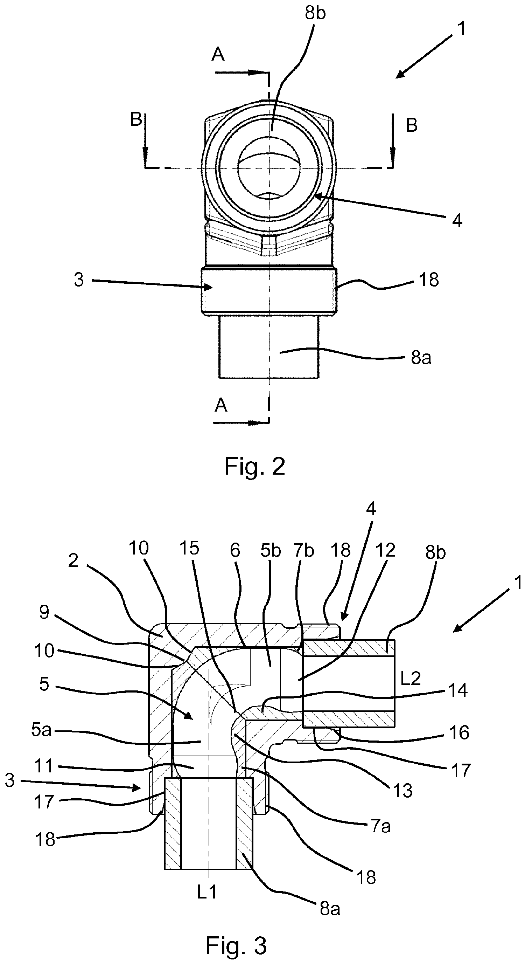

Fig. 2 zeigt ein Ausführungsbeispiel einer Fluidarmatur 1 in Seitenansicht. Der zweite Kanalzugang 4 ist dabei in Draufsicht zu erkennen. In den ersten Kanalzugang 3 ist eine Rohrleitung 8a eingebracht, in den zweiten Kanalzugang 4 eine zweite Rohrleitung 8b.

Fig. 3 zeigt das Ausführungsbeispiel einer Fluidarmatur 1 gemäß Fig. 2 im Schnitt entlang der Linie A-A der Fig. 2. Der Grundkörper 2 weist einen Einsatzraum 6 auf, der durch zwei in einem Winkel von 90° zueinander angeordneten Bohrungen gebildet ist, so dass sich am Treffpunkt der Konusspitzen der Bohrungen ein Vorsprung 9 ausgebildet hat. Das erste Einsatzteil 7a und das zweite Einsatzteil 7b weisen eine an den Vorsprung 9 angepasste Außenkontur auf, nämlich jeweils einen zu dem Vorsprung 9 zumindest teilweise korrespondierenden Rücksprung 10. Durch den mit dem Vorsprung 9 korrespondierenden Rücksprung 10 ist einerseits eine Lagerichtigkeit des ersten Einsatzteils 7a und des zweiten Einsatzteils 7b gewährleistet, andererseits wird das erste Einsatzteil 7a und das zweite Einsatzteil 7b in seiner jeweiligen Position stabilisiert.

Der Strömungskanal 5 verändert in seinem Verlauf zwischen der ersten Rohrleitung 8a und der zweiten Rohrleitung 8b seinen Querschnitt stetig, so dass Strömungsablösungen verhindert werden. Dabei ist der von dem zweiten Einsatzteil 7b abgewandte Querschnitt 11 - Eintrittsquerschnitt - des ersten Einsatzteils 7a sowie der von dem ersten Einsatzteil 7a abgewandte Querschnitt 12 - Eintrittsquerschnitt - des zweiten Einsatzteils 7b jeweils der kleinste Querschnitt des Strömungskanals 5 in dem jeweiligen Einsatzteil 7a, 7b.

Fig. 3 zeigt, dass das erste Einsatzteil 7a und das zweite Einsatzteil 7b eine variierende Wandstärke aufweisen. Ferner ist Fig. 3 zu entnehmen, dass das erste Einsatzteil 7a eine erste konvexe Aufwölbung 13 und das zweite Einsatzteil 7b eine zweite konvexe Aufwölbung 14 aufweist. Die konvexen Aufwölbungen 13, 14 sind jeweils im Übergangsbereich, also in der Nähe der Stoßfläche 15 zwischen dem ersten Einsatzteil 7a und dem zweiten Einsatzteil 7b ausgebildet, so dass an der Stoßfläche 15 bzw. im Übergangsbereich ein Tal - ein lokales Minimum - zwischen der ersten Aufwölbung 13 des ersten Einsatzteils 7a und der zweiten Aufwölbung 14 des zweiten Einsatzteils 7b entsteht. Die Längsachse L1 des ersten Einsatzteils 7a, die gleichzeitig die Verlängerung der Mittelachse der Rohrleitung 8a ist, kreuzt sich in der Stoßfläche 15 mit der Längsachse L2 des zweiten Einsatzteils 7b, die gleichzeitig die Verlängerung der Mittelachse der Rohrleitung 8b ist.

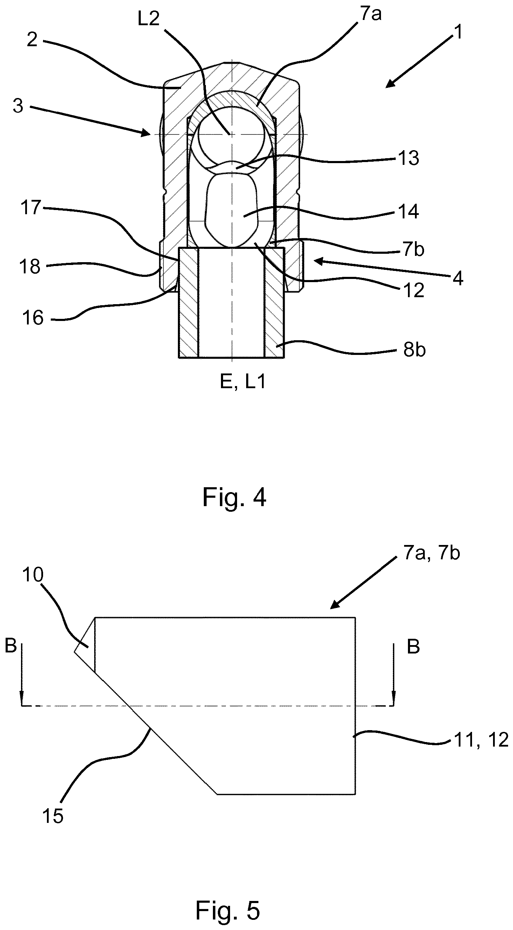

Fig. 4 zeigt das Ausführungsbeispiel gemäß Fig. 2 in der Schnittansicht entlang der Linie B-B. Die zweite Aufwölbung 14 des zweiten Einsatzteils 7b ist derart angeordnet, dass sie sich in einer Ebene E befindet, die durch die beiden Längsachsen L1, L2 (siehe Fig. 3) des ersten Teils 5a des Strömungskanals 5 und des zweiten Teils 5b des Strömungskanals 5 bzw. der Verlängerung der Mittelachsen der Rohrleitungen 8a, 8b aufgespannt wird.

Fig. 4 zeigt ferner, dass der Grundkörper 2 am ersten Kanalzugang 3 und am zweiten Kanalzugang 4 jeweils einen Anschlusskonus 16 mit einem zylindrischen Bereich 17 zur Montage einer Rohrleitung 8a, 8b mit einem - nicht dargestellten - vormontierten Schneidring ermöglicht. Eine Überwurfmutter wirkt dabei mit einem der Außengewinde 18 des Grundkörpers 2 zusammen.

Fig. 5 zeigt ein Ausführungsbeispiel eines ersten bzw. zweiten Einsatzteils 7a, 7b in Seitenansicht. Die Stoßfläche 15 hat in dieser Ansicht eine Neigung von etwa 45°. Der Rücksprung 10 in der Außenkontur dient der Anpassung an einen beispielsweise in Fig. 1 dargestellten Vorsprung 9.

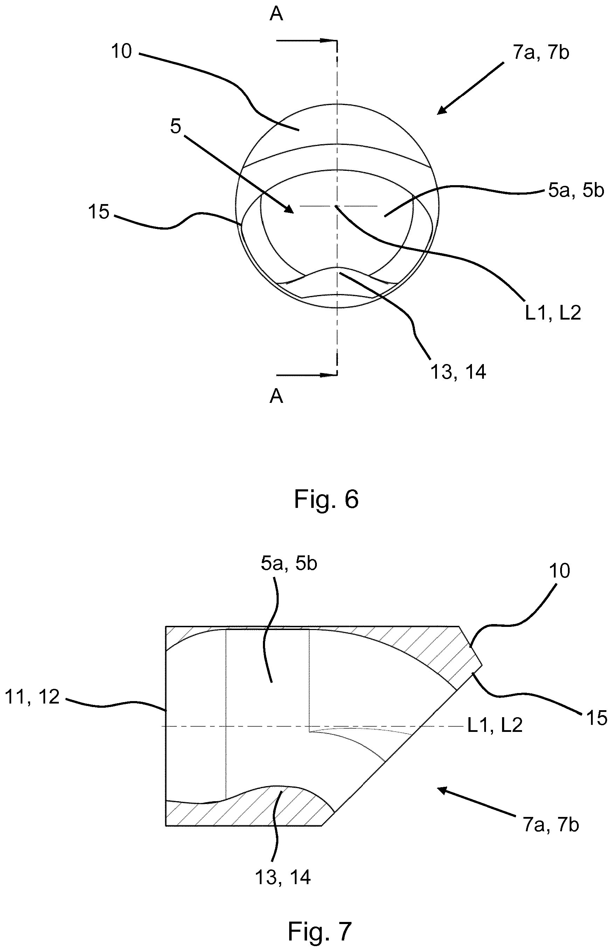

Fig. 6 zeigt eine Draufsicht des Ausführungsbeispiels eines ersten bzw. zweiten Einsatzteils 7a, 7b gemäß Fig. 5. Der Rücksprung 10 weist eine gewölbte, sichelförmige Kontur auf, die an den Vorsprung 9 (siehe Fig. 3) zumindest teilweise angepasst ist. Die konvexe Aufwölbung 13, 14 erhebt sich deutlich aus der Wand des Strömungskanals 5 bzw. des ersten oder zweiten Strömungskanalabschnitts 5a, 5b. Die Aufwölbung 13, 14 wird teilweise von der Stoßfläche 15 geschnitten.

Fig. 7 zeigt das Ausführungsbeispiel eines ersten bzw. zweiten Einsatzteils 7a, 7b geschnitten entlang der Linie A-A in Fig. 6. Der erste bzw. zweite Strömungskanalabschnitt 5a, 5b hat seinen kleinsten Querschnitt 11, 12 an der in Fig. 7 links dargestellten Seite. Die konvexe Aufwölbung 13, 14 befindet sich in der Nähe der Stoßfläche 15.

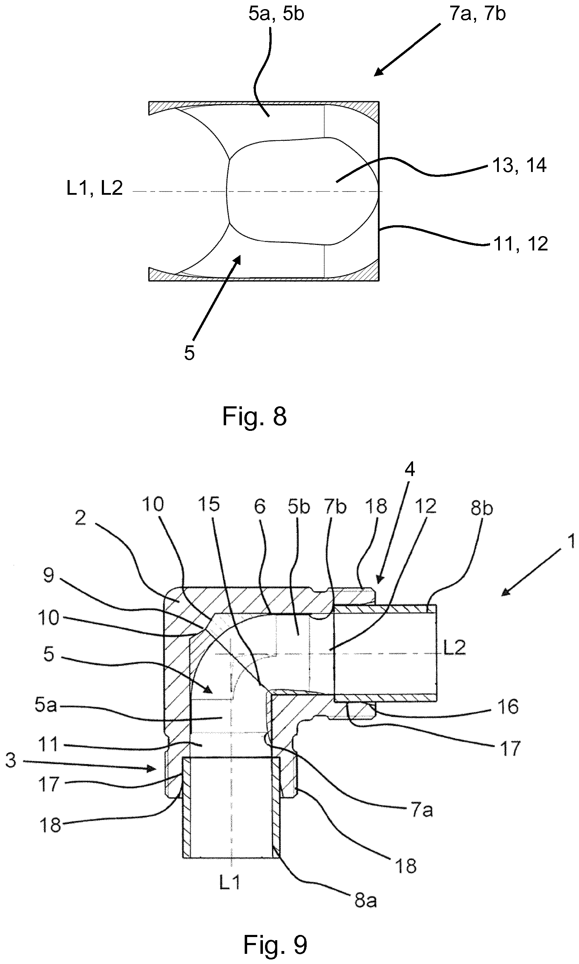

Fig. 8 zeigt das Ausführungsbeispiel eines ersten bzw. zweiten Einsatzteils 7a, 7b geschnitten entlang der Linie B-B in Fig. 5. Die Wandstärke des Einsatzteils 7a, 7b nimmt zu den - in Fig. 8 links und rechts dargestellten - Randbereichen in diesem Schnitt zu. Die konvexe Aufwölbung 13, 14 ist in Längsrichtung des ersten bzw. zweiten Einsatzteils 7a, 7b spiegelsymmetrisch ausgebildet. Die Aufwölbung 13, 14 ist in Richtung des jeweiligen Kanalzugangs 3, 4 (siehe Fig. 4) breiter ausgebildet als in Richtung des jeweiligen anderen Einsatzteils 7a, 7b. Ausgehend von der höchsten Stelle der Aufwölbung 13, 14 fallen die Flanken der Aufwölbung 13, 14 in alle Richtungen ab. Die Aufwölbung 13, 14 wird von der Stoßfläche 15 geschnitten. Die beiden Schnittflächen von zwei Aufwölbungen 13, 14 liegen im Montagezustand im Grundkörper 2 aneinander (siehe Fig. 3). Der kleinste Querschnitt 11, 12 des Strömungskanals 5 ist im Montagezustand (siehe Fig. 3) in Richtung der Kanalzugänge 3, 4 orientiert.

Fig. 9 zeigt ein weiteres Ausführungsbeispiel einer Fluidarmatur 1 im Schnitt. Das erste Einsatzteil 7a und das zweite Einsatzteil 7b weisen eine variierende Wandstärke auf. Der Strömungsquerschnitt des Strömungskanals 5 ist im ersten Strömungskanalabschnitt 5a und im zweiten Strömungskanalabschnitt 5b im Wesentlichen konstant. Der Strömungskanal 5 wird aus einem ersten Strömungskanalabschnitt 5a des Strömungskanals 5 im ersten Einsatzteil 7a und einem zweiten Strömungskanalabschnitt 5b des Strömungskanals 5 im zweiten Einsatzteil 7b gebildet. Die Längsachse L1 des ersten Einsatzteils 7a, die gleichzeitig die Verlängerung der Mittelachse der Rohrleitung 8a ist, kreuzt sich in der Stoßfläche 15 mit der Längsachse L2 des zweiten Einsatzteils 7b, die gleichzeitig die Verlängerung der Mittelachse der Rohrleitung 8b ist.

Gemäß Fig. 9 weist der Grundkörper 2 einen Einsatzraum 6 auf, der durch zwei in einem Winkel von 90° zueinander angeordneten Bohrungen gebildet ist, so dass sich am Treffpunkt der Konusspitzen der Bohrungen ein Vorsprung 9 ausgebildet hat. Das erste Einsatzteil 7a und das zweite Einsatzteil 7b weisen eine an den Vorsprung 9 angepasste Außenkontur auf, nämlich jeweils einen zu dem Vorsprung 9 zumindest teilweise korrespondierenden Rücksprung 10.

Durch den mit dem Vorsprung 9 korrespondierenden Rücksprung 10 ist einerseits eine Lagerichtigkeit des ersten Einsatzteils 7a und des zweiten Einsatzteils 7b gewährleistet, andererseits wird das erste Einsatzteil 7a und das zweite Einsatzteil 7b in seiner jeweiligen Position stabilisiert.

Das erste Einsatzteil 7a und das zweite Einsatzteil 7b sind bei diesem Ausführungsbeispiel vollständig identisch ausgebildet und aus unterschiedlichen Richtungen in den Einsatzraum 6 eingebracht. Gemäß Fig. 9 ist das erste Einsatzteil 7a von unten und das zweite Einsatzteil 7b von rechts in den Grundkörper 2 eingebracht. Das erste Einsatzteil 7a und das zweite Einsatzteil 7b sind so ausgebildet, dass sie über den gesamten Umfang bis an die Stirnseite der ersten Rohrleitung 8a bzw. bis an die Stirnseite der zweiten Rohrleitung 8b heranreichen.

Die Erfindung ist nicht auf die dargestellten und beschriebenen Ausführungsbeispiele beschränkt.

## Bezugszeichenliste

| | |
|---|---|
| 1 | Fluidarmatur |
| 2 | Grundkörper |
| 3 | Erster Kanalzugang |
| 4 | Zweiter Kanalzugang |
| 5 | Strömungskanal |
| 5a | Erster Strömungskanalabschnitt |
| 5b | Zweiter Strömungskanalabschnitt |
| 6 | Einsatzraum |
| 7 | Einsatz |
| 7a | Erstes Einsatzteil |
| 7b | Zweites Einsatzteil |
| 8a | Rohrleitung im ersten Kanalzugang 3 |
| 8b | Rohrleitung im zweiten Kanalzugang 4 |
| 9 | Vorsprung |
| 10 | Rücksprung |
| 11 | Querschnitt des ersten Einsatzteils 7a |
| 12 | Querschnitt des zweiten Einsatzteils 7b |
| 13 | Erste Aufwölbung des ersten Einsatzteils 7a |
| 14 | Zweite Aufwölbung des zweiten Einsatzteils 7b |
| 15 | Stoßfläche |
| 16 | Anschlusskonus |
| 17 | Zylindrischer Bereich |
| 18 | Außengewinde |
| | |
| E | Ebene |

## Patentansprüche

1. Fluidarmatur (1) für eine Fluidleitung, mit einem Grundkörper (2), wobei der Grundkörper (2) mindestens einen ersten Kanalzugang (3) und mindestens einen zweiten Kanalzugang (4) aufweist, wobei der erste Kanalzugang (3) und der zweite Kanalzugang (4) mit einem Strömungskanal (5) verbunden sind, wobei in dem Grundkörper (2) mindestens ein Einsatzraum (6) ausgebildet ist, wobei in den Einsatzraum (6) mindestens ein Einsatz (7) eingebracht ist, und wobei der Strömungskanal (5) zumindest teilweise durch den Einsatz (7) verläuft, wobei der Einsatz (7) mindestens ein erstes Einsatzteil (7a) und mindestens ein zweites Einsatzteil (7b) aufweist, **dadurch gekennzeichnet, dass** das erste Einsatzteil (7a) und/oder das zweite Einsatzteil (7b) eine konvexe Aufwölbung (13, 14) aufweist/aufweisen, die in den Strömungskanal (5) hineinragt.

2. Fluidarmatur (1) nach Anspruch 1, **dadurch gekennzeichnet, dass** das erste Einsatzteil (7a) und das zweite Einsatzteil (7b) identisch ausgebildet sind oder dass das erste Einsatzteil (7a) und das zweite Einsatzteil (7b) unterschiedlich ausgebildet sind, so dass der Strömungskanal (5) eine bevorzugte Strömungsrichtung aufweist.

3. Fluidarmatur (1) nach Anspruch 1 oder 2, **dadurch gekennzeichnet, dass** dass das erste Einsatzteil (7a) und das zweite Einsatzteil (7b) aus zwei unterschiedlichen Richtungen in den Grundkörper (2) eingebracht sind, insbesondere das erste Einsatzteil (7a) aus Richtung des ersten Kanalzugangs (3) und das zweite Einsatzteil (7b) aus Richtung des zweiten Kanalzugangs (4).

4. Fluidarmatur (1) nach einem der Ansprüche 1 bis 3, **dadurch gekennzeichnet, dass** der Einsatzraum (6) mindestens durch eine erste Bohrung und eine zweite Bohrung in dem Grundkörper (2) ausgebildet ist, dass die erste Bohrung und die zweite Bohrung in einem Winkel zwischen 5° und 175°, insbesondere in einem Winkel von 45°, 60°, 90° oder 130°, zueinander angeordnet sind, so dass in einem Stoßbereich der ersten Bohrung und der zweiten Bohrung ein Vorsprung (9) ausgebildet ist, und dass das erste Einsatzteil (7a) und/oder das zweite Einsatzteil (7b) eine an den Vorsprung (9) angepasste Außenkontur, insbesondere einen zu dem Vorsprung (9) zumindest teilweise korrespondierenden Rücksprung (10) aufweisen.

5. Fluidarmatur (1) nach einem der Ansprüche 1 bis 4, **dadurch gekennzeichnet, dass** das erste Einsatzteil (7a) und das zweite Einsatzteil (7b) jeweils ein Rastmittel aufweisen, so dass ein form- und/oder kraftschlüssiges, bevorzugt kraftformschlüssiges, Zusammenwirken, insbesondere Verrasten, des ersten Einsatzteils (7a) mit dem zweiten Einsatzteil (7b) erfolgt und/oder dass das erste Einsatzteil (7a) und das zweite Einsatzteil (7b) nach dem Einbringen in den Grundkörper (2) zumindest teilweise stoffschlüssig zusammengefügt worden sind.

6. Fluidarmatur (1) nach einem der Ansprüche 1 bis 5, **dadurch gekennzeichnet, dass** der Strömungskanal (5) einen sich im Verlauf innerhalb des ersten Einsatzteils (7a) und/oder des zweiten Einsatzteils (7b) verändernden Querschnitt, insbesondere mit konstanter Querschnittsfläche, aufweist oder dass der Strömungskanal (5) innerhalb des ersten Einsatzteils (7a) und/oder des zweiten Einsatzteils (7b) einen konstanten Querschnitt aufweist.

7. Fluidarmatur (1) nach einem der Ansprüche 1 bis 6, **dadurch gekennzeichnet, dass** der Querschnitt des Strömungskanals (5) im ersten Einsatzteil (7a) und im zweiten Einsatzteil (7b), insbesondere der Strömungskanal (5) durch das erste Einsatzteil (7a) und das zweite Einsatzteil (7b), einen stetigen Verlauf aufweist und/oder dass der vom zweiten Einsatzteil (7b) abgewandte Querschnitt (11) des Strömungskanals (5) im ersten Einsatzteil (7a) und der von dem ersten Einsatzteil (7a) abgewandte Querschnitt (12) des Strömungskanals (5) im zweiten Einsatzteil (7b) jeweils der kleinste Querschnitt (11,12) des Strömungskanals (5) im jeweiligen Einsatzteil (7a, 7b) ist.

8. Fluidarmatur (1) nach einem der Ansprüche 1 bis 7, **dadurch gekennzeichnet, dass** das erste Einsatzteil (7a) und/oder das zweite Einsatzteil (7b) eine variierende Wandstärke aufweisen.

9. Fluidarmatur (1) nach einem der Ansprüche 1 bis 8, **dadurch gekennzeichnet, dass** die konvexe Aufwölbung (13, 14) im Übergangsbereich zwischen dem ersten Einsatzteil (7a) und dem zweiten Einsatzteil (7b) angeordnet ist.

10. Fluidarmatur (1) nach einem der Ansprüche 1 bis 9, **dadurch gekennzeichnet, dass** das erste Einsatzteil (7a) und/oder das zweite Einsatzteil (7b) durch eine mit der Fluidarmatur (1) verbundene Rohr- oder Schlauchleitung (8a, 8b) in Position gehalten werden und/oder dass die Fluidarmatur (1) eine Winkelverschraubung, insbesondere 90°-Verschraubung, ist.

11. Fluidarmatur (1) nach einem der Ansprüche 1 bis 10, **dadurch gekennzeichnet, dass**

das erste Einsatzteil (7a) und/oder das zweite Einsatzteil (7b) in Axialrichtung komprimierbar ausgebildet sind, insbesondere elastisch verformbar ausgebildet sind und/oder dass der Grundkörper (2) am ersten Kanalzugang (3) und/oder am zweiten Kanalzugang (4) einen Anschlusskonus (16) mit einem zylindrischen Bereich (17) aufweist

12. Fluidarmatur (1) nach einem der Ansprüche 1 bis 11, **dadurch gekennzeichnet, dass** das erste Einsatzteil (7a) und/oder das zweite Einsatzteil (7b) in den Einsatzraum (6) eingepresst sind, insbesondere dass die Oberflächenrauheit im Einsatzraum (6) derart bearbeitet ist, dass ein eingepresstes Einsatzteil (7a, 7b) fest in dem Einsatzraum (6) gehalten wird, bevorzugt weisen das erste Einsatzteil (7a) und/oder das zweite Einsatzteil (7b) zum Einpressen ein geringes Übermaß gegenüber dem Einsatzraum (6) auf.

13. Fluidarmatur (1) nach einem der Ansprüche 1 bis 12, **dadurch gekennzeichnet, dass** das erste Einsatzteilteil (7a) und/oder das zweite Einsatzteil (7b) aus einem verstärkten oder unverstärkten Kunststoff, insbesondere Polyamid (PA) oder aus einem Elastomer, insbesondere thermoplastischem Elastomer (TPE), oder einem Metall, insbesondere Aluminium, Stahl oder Druckguss, ausgebildet sind, bevorzugt dass das erste Einsatzteil (7a) und/oder das zweite Einsatzteil (7b) durch ein 3D-Druckverfahren hergestellt sind.

## Claims

1. Fluid fitting (1) for a fluid line, having a base body (2), wherein the base body (2) has at least a first channel entry (3) and at least a second channel entry (4), wherein the first channel entry (3) and the second channel entry (4) are connected to a flow channel (5), wherein at least one insert space (6) is formed in the base body (2), wherein at least one insert (7) is introduced into the insert space (6), and wherein the flow channel (5) runs at least partially through the insert (7), wherein the insert (7) has at least a first insert part (7a) and at least a second insert part (7b),
   **characterized in that**
   the first insert part (7a) and/or the second insert part (7b) has/have a convex bulge (13, 14) which projects into the flow channel (5).

2. Fluid fitting (1) according to Claim 1,
   **characterized in that**
   the first insert part (7a) and the second insert part (7b) are of identical form, or **in that** the first insert part (7a) and the second insert part (7b) are of different form, such that the flow channel (5) has a preferred flow direction.

3. Fluid fitting (1) according to Claim 1 or 2,
   **characterized in that**
   the first insert part (7a) and the second insert part (7b) are introduced from two different directions into the base body (2), in particular the first insert part (7a) from the direction of the first channel entry (3) and the second insert part (7b) from the direction of the second channel entry (4) .

4. Fluid fitting (1) according to one of Claims 1 to 3,
   **characterized in that**
   the insert space (6) is formed at least by a first bore and a second bore in the base body (2), **in that** the first bore and the second bore are arranged at an angle of between 5° and 175°, in particular at an angle of 45°, 60°, 90° or 130°, relative to one another, such that a projection (9) is formed in a region of abutment of the first bore and the second bore, and **in that** the first insert part (7a) and/or the second insert part (7b) have/has an outer contour which is adapted to the projection (9), in particular a set-back portion (10) which corresponds at least partially to the projection (9).

5. Fluid fitting (1) according to one of Claims 1 to 4,
   **characterized in that**
   the first insert part (7a) and the second insert part (7b) each have a latching means, such that a form-fitting and/or force-fitting, preferably force- and form-fitting, interaction, in particular latching, of the first insert part (7a) with the second insert part (7b) is effected, and/or **in that** the first insert part (7a) and the second insert part (7b) have been joined together at least partially in a materially bonded manner after introduction into the base body (2).

6. Fluid fitting (1) according to one of Claims 1 to 5,
   **characterized in that**
   the flow channel (5) has a cross section which varies in the profile within the first insert part (7a) and/or the second insert part (7b), in particular with a constant cross-sectional area, or **in that** the flow channel (5) has a constant cross section within the first insert part (7a) and/or the second insert part (7b).

7. Fluid fitting (1) according to one of Claims 1 to 6,
   **characterized in that**
   the cross section of the flow channel (5) in the first insert part (7a) and in the second insert part (7b), in particular the flow channel (5) through the first insert part (7a) and the second insert part (7b), has a constant profile, and/or **in that** the cross section (11), facing away from the second insert part (7b), of the flow channel (5) in the first insert part (7a) and the cross section (12), facing away from the first insert part (7a), of the flow channel (5) in the second insert part (7b) is in each case the smallest cross section (11, 12) of the flow channel (5) in the respective insert part (7a, 7b).

8. Fluid fitting (1) according to one of Claims 1 to 7,
   **characterized in that**
   the first insert part (7a) and/or the second insert part (7b) have/has a varying wall thickness.

9. Fluid fitting (1) according to one of Claims 1 to 8,
   **characterized in that**
   the convex bulge (13, 14) is arranged in the transition region between the first insert part (7a) and the second insert part (7b).

10. Fluid fitting (1) according to one of Claims 1 to 9,
    **characterized in that**
    the first insert part (7a) and/or the second insert part (7b) are/is retained in position by a pipe or hose line (8a, 8b) connected to the fluid fitting (1), and/or **in that** the fluid fitting (1) is an elbow fitting, in particular a 90° fitting.

11. Fluid fitting (1) according to one of Claims 1 to 10,
    **characterized in that**
    the first insert part (7a) and/or the second insert part (7b) are designed to be compressible in an axial direction, in particular are designed to be elastically deformable, and/or **in that** the base body (2) has, at the first channel entry (3) and/or at the second channel entry (4), a connection cone (16) with a cylindrical region (17).

**12.** Fluid fitting (1) according to one of Claims 1 to 11, **characterized in that** the first insert part (7a) and/or the second insert part (7b) are pressed into the insert space (6), in particular **in that** the surface roughness in the insert space (6) is machined in such a way that a pressed-in insert part (7a, 7b) is firmly retained in the insert space (6), preferably, for the pressing-in, the first insert part (7a) and/or the second insert part (7b) have/has a small oversize in relation to the insert space (6).

**13.** Fluid fitting (1) according to one of Claims 1 to 12, **characterized in that** the first insert part (7a) and/or the second insert part (7b) are/is formed from a reinforced or nonreinforced plastic, in particular polyamide (PA), or from an elastomer, in particular thermoplastic elastomer (TPE), or a metal, in particular aluminium, steel or die-cast metal, preferably **in that** the first insert part (7a) and/or the second insert part (7b) are produced by a 3D printing process.

**Revendications**

**1.** Élément de robinetterie à fluide (1) pour une conduite de fluide, comprenant un corps de base (2), le corps de base (2) comprenant au moins un premier accès de canal (3) et au moins un deuxième accès de canal (4), le premier accès de canal (3) et le deuxième accès de canal (4) étant reliés à un canal d'écoulement (5), au moins un espace d'insert (6) étant formé dans le corps de base (2), au moins un insert (7) étant introduit dans l'espace d'insert (6), et le canal d'écoulement (5) s'étendant au moins partiellement à travers l'insert (7), l'insert (7) comprenant au moins une première partie d'insert (7a) et au moins une deuxième partie d'insert (7b), **caractérisé en ce que** la première partie d'insert (7a) et/ou la deuxième partie d'insert (7b) présente/présentent un bombement convexe (13, 14), qui s'étend dans le canal d'écoulement (5).

**2.** Élément de robinetterie à fluide (1) selon la revendication 1, **caractérisé en ce que** la première partie d'insert (7a) et la deuxième partie d'insert (7b) sont configurées de manière identique ou **en ce que** la première partie d'insert (7a) et la deuxième partie d'insert (7b) sont configurées de manière différente, de telle sorte que le canal d'écoulement (5) présente une direction d'écoulement préférentielle.

**3.** Élément de robinetterie à fluide (1) selon la revendication 1 ou 2, **caractérisé en ce que** la première partie d'insert (7a) et la deuxième partie d'insert (7b) sont introduites dans le corps de base (2) à partir de deux directions différentes, notamment la première partie d'insert (7a) à partir de la direction du premier accès de canal (3) et la deuxième partie d'insert (7b) à partir de la direction du deuxième accès de canal (4).

**4.** Élément de robinetterie à fluide (1) selon l'une quelconque des revendications 1 à 3, **caractérisé en ce que** l'espace d'insert (6) est formé au moins par un premier alésage et un deuxième alésage dans le corps de base (2), **en ce que** le premier alésage et le deuxième alésage sont agencés l'un par rapport à l'autre à un angle compris entre 5° et 175°, notamment à un angle de 45°, 60°, 90° ou 130°, de telle sorte qu'une protubérance (9) est formée dans une zone de collision du premier alésage et du deuxième alésage, et **en ce que** la première partie d'insert (7a) et/ou la deuxième partie d'insert (7b) présentent un contour extérieur adapté à la protubérance (9), notamment un retrait (10) correspondant au moins partiellement à la protubérance (9) .

**5.** Élément de robinetterie à fluide (1) selon l'une quelconque des revendications 1 à 4, **caractérisé en ce que** la première partie d'insert (7a) et la deuxième partie d'insert (7b) comprennent chacune un moyen d'encliquetage, de telle sorte qu'une coopération, notamment un encliquetage, par accouplement de forme et/ou de force, de préférence par accouplement de force et de forme, de la première partie d'insert (7a) avec la deuxième partie d'insert (7b) a lieu, et/ou **en ce que** la première partie d'insert (7a) et la deuxième partie d'insert (7b) ont été au moins partiellement assemblées par accouplement de matière après l'introduction dans le corps de base (2).

**6.** Élément de robinetterie à fluide (1) selon l'une quelconque des revendications 1 à 5, **caractérisé en ce que** le canal d'écoulement (5) présente une section transversale variable dans l'étendue à l'intérieur de la première partie d'insertion (7a) et/ou de la deuxième partie d'insertion (7b), notamment avec une aire de section transversale constante, ou **en ce que** le canal d'écoulement (5) présente une section transversale constante à l'intérieur de la première partie d'insertion (7a) et/ou de la deuxième partie d'insertion (7b).

7.  Élément de robinetterie à fluide (1) selon l'une quelconque des revendications 1 à 6, **caractérisé en ce que** la section transversale du canal d'écoulement (5) dans la première partie d'insertion (7a) et dans la deuxième partie d'insertion (7b), notamment le canal d'insertion (5) à travers la première partie d'insertion (7a) et la deuxième partie d'insertion (7b), présente une allure continue, et/ou **en ce que** la section transversale (11) du canal d'écoulement (5) détournée de la deuxième partie d'insertion (7b) dans la première partie d'insertion (7a) et la section transversale (12) du canal d'écoulement (5) détournée de la première partie d'insertion (7a) dans la deuxième partie d'insertion (7b) est à chaque fois la section transversale la plus petite (11, 12) du canal d'écoulement (5) dans la partie d'insertion respective (7a, 7b).

8.  Élément de robinetterie à fluide (1) selon l'une quelconque des revendications 1 à 7, **caractérisé en ce que** la première partie d'insertion (7a) et/ou la deuxième partie d'insertion (7b) présentent une épaisseur de paroi variable.

9.  Élément de robinetterie à fluide (1) selon l'une quelconque des revendications 1 à 8, **caractérisé en ce que** le bombement convexe (13, 14) est agencé dans la zone de transition entre la première partie d'insertion (7a) et la deuxième partie d'insertion (7b).

10.  Élément de robinetterie à fluide (1) selon l'une quelconque des revendications 1 à 9, **caractérisé en ce que** la première partie d'insertion (7a) et/ou la deuxième partie d'insertion (7b) sont maintenues en position par une conduite tubulaire ou flexible (8a, 8b) reliée à l'élément de robinetterie à fluide (1), et/ou **en ce que** l'élément de robinetterie à fluide (1) est un raccord vissé d'angle, notamment un raccord vissé à 90°.

11.  Élément de robinetterie à fluide (1) selon l'une quelconque des revendications 1 à 10, **caractérisé en ce que**

la première partie d'insert (7a) et/ou la deuxième partie d'insert (7b) sont configurées sous forme comprimable dans la direction axiale, notamment sont configurées sous forme déformable élastiquement et/ou **en ce que** le corps de base (2) comprend au niveau du premier accès de canal (3) et/ou au niveau du deuxième accès de canal (4) un cône de raccordement (16) muni d'une zone cylindrique (17).

12.  Élément de robinetterie à fluide (1) selon l'une quelconque des revendications 1 à 11, **caractérisé en ce que** la première partie d'insert (7a) et/ou la deuxième partie d'insert (7b) sont enfoncées dans l'espace d'insert (6), notamment **en ce que** la rugosité de surface dans l'espace d'insert (6) est usinée de telle sorte qu'une partie d'insert enfoncée (7a, 7b) est maintenue fermement dans l'espace d'insert (6), la première partie d'insert (7a) et/ou la deuxième partie d'insert (7b) présentant de préférence pour l'enfoncement une petite surmesure par rapport à l'espace d'insert (6).

13.  Élément de robinetterie à fluide (1) selon l'une quelconque des revendications 1 à 12, **caractérisé en ce que** la première partie d'insert (7a) et/ou la deuxième partie d'insert (7b) sont formées en une matière plastique renforcée ou non renforcée, notamment en polyamide (PA) ou en un élastomère, notamment un élastomère thermoplastique (TPE), ou en un métal, notamment en aluminium, en acier ou en un métal moulé sous pression, de préférence **en ce que** la première partie d'insert (7a) et/ou la deuxième partie d'insert (7b) sont fabriquées par un procédé d'impression 3D.

Fig. 1

EP 3 612 762 B1

Fig. 2

Fig. 3

Fig. 4

Fig. 5

Fig. 6

Fig. 7

5a, 5b

7a, 7b

L1, L2

13, 14

11, 12

5

Fig. 8

4

10  15  6  5b  7b  18  12  8b

2

9

10

10

5

5a

11

3

17

18

1

L2

16

17

7a

18

L1

8a

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2288836 A1
- DE 1078509 B
- US 2010065140 A1
- US 2014166149 A1
- US 2017014887 A1